# EUROPEAN PATENT APPLICATION

(11) **EP 3 751 471 A1**
(43) Date of publication of application: **16.12.2020**
(21) Application number: 19179576.4
(22) Date of filing: 12.06.2019
(51) Int. Cl.: G06N 5/02, G06N 3/04, G06N 3/08

(54) **CONFIGURING AND CONSTRUCTING A TECHNICAL SYSTEM**

(71) Applicant: Siemens Aktiengesellschaft, 80333 München (DE)
(72) Inventor: Hildebrandt, Marcel, 81737 München (DE); Mogoreanu, Serghei, 81827 München (DE); Rümmele, Nataliia, 81739 München (DE); Shyam Sunder, Swathi, 81549 München (DE)

(57) **Abstract**

The invention specifies a computerized method for configuring and constructing (B) a technical system (3), comprising the following steps:
- Suggesting (1) templates (5) for configuring the technical system (1) by a first recommender unit,
- selecting (2) a template (5) by a user,
- suggesting (1) hardware configurations for the technical system (3) corresponding to the suggested (1) templates (5) by a second recommender unit, whereas each hardware configuration comprises configurable items,
- selecting (2) a specific hardware configuration by a user,
- storing the selected (2) hardware configuration as historical hardware configuration (6),
- transferring the historical hardware configuration (6) to a computational system, and
- configuring the technical system (3) for preparation of the construction (B) of the technical system (3) using the selected (2) hardware configuration.

The invention further specifies a computational device, a computer program product, and a computer-readable storage medium.

## Description

### Field of the Invention

The present invention relates to a computerized method for configuring and constructing a technical system, a computational device, a computer program product, and a computer-readable storage medium.

### Background of the Invention

Configuring a technical project, e.g. an industrial automation solution - especially without a considerable amount of expert knowledge - is a complex task. An industrial automation solution can be very complex and be comprised of a wide range of different subsystems and components, forming complex structures rather than being independent. Each component possesses a variety of different features required for the operation of the respective system. In addition, the components need to be compatible and their interplay needs to guarantee the required functionality.

Typically, solution configuration software does not employ templates as a basis to start provided to the user. Instead, the user is presented with a catalogue of available items, from which those items, which in combination fulfil all the requirements, are incrementally selected. When a template-based configuration is offered, the templates are hand-crafted using an input from a domain expert.

### Summary of the Invention

The objective of the present invention is to facilitate the configuration and construction of a technical system.

The invention is given by the features of the independent claims.

Advantageous embodiments are provided in the dependent claims. Further features, application possibilities, and advantages of the invention result from the following description.

According to the invention the objective is accomplished by a method to assist the user in the process of configuring a technical system (e.g. an industrial automation solution or other type of hardware configuration) by firstly proposing the general structure/ template of the underlying technical system, followed by secondly recommending the user specific components or items (e.g. hardware components/ configurable items/ technical devices) to complete the high-level structure, such that all functional requirements are fulfilled. The configuration is then used to construct the technical system.

The invention claims a computerized method for configuring and constructing a technical system. The method comprises the following steps:
- Suggesting templates for configuring the technical system by a first recommender unit,
- selecting a template by a user,
- suggesting hardware configurations for the technical system corresponding to the suggested templates by a second recommender unit, whereas each hardware configuration comprises configurable items,
- selecting a specific hardware configuration by a user,
- storing the selected hardware configuration as historical hardware configuration,
- transferring the historical hardware configuration to a computational system, and
- configuring the technical system for preparation of the construction of the technical system using the selected hardware configuration.

Hardware configuration means which components/ configurable items should be selected for the technical system, and how properties of the selected components should be configured. Technical devices can be viewed as a special type of configurable items which are a special type of system components.

The first recommender unit provides suggestions for high-level templates. The second recommender unit provides suggestions for further configuration of the templates.

Based on the template suggested by the first recommender unit, the second recommender unit suggests the complete hardware configuration details and not just node types and link types. The templates form the general structure of the underlying technical system. The generated suggestions depend on the granularity of the template. If the templates are on the level of components (configurable items/ technical devices), the suggestions provided by the second recommender unit would contain other components (configurable items/ technical devices) that function well in combination. On the other hand, the templates could also refer to the configuration of the configurable items/ technical devices, e.g., specifying features (technical information) of the configurable items/ technical devices and associated feature values. In such a scenario, the recommendations would also correspond to these configuration details.

According to a further embodiment, the suggestion of the templates is based on a specified tag and/ or a collection of configurable items/ technical devices specified to be part of the technical system.

When building up a new hardware configuration, the user will first obtain general templates. Onwards, the user will obtain better, more specific suggestions for templates if:
A. The user specifies a tag (e.g., conveyor belt). Such tag is used to refine a template due to annotations provided by the user. To enable further customization and context enhancement, the user can provide annotations for some of the discovered templates. The user can then apply filters based on these annotations.
B. The user starts adding devices and consequently obtains more specific templates.

This means the user obtains general templates from the first recommender unit when no context is provided, and by giving more context the user gets more concrete and better recommendations from both units. Further, when the user starts adding devices/ configurable items, the recommendation for new devices/ configurable items by the second recommender unit also become better, since the second recommendation unit takes into account both the selected template and already selected devices/ configurable items within the template.

According to a further embodiment, the first recommender unit and the second recommender unit are trained by the following steps:
- Representing the historical hardware configurations merged with technical information of the configurable items in the form of a knowledge graph by the computational system,-
- training the first recommender unit using the knowledge graph,
   and
- training the second recommender unit to adapt the suggestion of hardware configurations.

Historical hardware configurations can be represented as a collection of configuration graphs, where each configuration graph is typed, i.e. nodes and links in the configuration graph have types. Nodes correspond to configurable items/ technical devices which form the hardware configuration of the technical system. Type is a categorical attribute with a sensible amount of category levels. As the type of links, we can take either composite relationship between configurable items/ technical devices of the technical system or we can consider the temporal addition of configurable items/ technical devices. Possible choices for node types could be device category or device type.

The information about historical hardware configurations is then merged together with the technical information of the configurable items/ technical devices of the hardware configurations in a knowledge graph (joint graph database) and stored for example in a triple data store, e.g. using Resource Description Framework (RDF) format. Thereby, all entities under consideration (e.g. configurable items/ technical devices) correspond to nodes in a directed typed graph (i.e., a graph with typed edges). Relations specify how the entities relate to each other. For example, historical configurations are linked to configurable items/ technical devices via the "contains" relation. Other relations link configurable items/ technical devices with technical attributes. Such a knowledge graph has a numerical representation in terms of an adjacency tensor.

Depending on the choice of node types and link types, we will obtain different configuration graphs, a different knowledge graph, and different templates from the knowledge graph. (The generation of templates from the knowledge graph is described below).

A knowledge graph is defined as a graph database that contains information about historical hardware configurations together with the technical information of the configurable items, stored in a triple data store, using e.g. RDF format. The knowledge graph can equivalently be represented as a sparse numerical tensor with three modes, where the frontal slices correspond to adjacency matrices with respect to the different edge types/ relations.

Afterwards the next step, the training of the first recommender unit and the second recommender unit is performed. The knowledge graph, containing the historical hardware configurations as well as the technical information of the configurable items/ technical devices are used to train the second recommender unit. The architecture of the second recommender unit is designed such that it can capture both the associations and the non-linear dependencies across the components (it is designed as a relational recommendation system/ recommender unit). A recommender unit model for the first recommender unit is then trained efficiently in an end-to-end fashion and can be used for generating recommendations/ suggestions for template completion. This process of training the first recommender unit and the second recommender unit must be performed periodically, e.g., quarterly, to ensure alignment with the newly generated hardware configurations.

A relational recommendation system/ recommender unit is a hybrid recommender engine that takes as input a numerical vector corresponding to the partial configuration (e.g. multi-hot encoded) concatenated with the specified tag and an encoding of the selected template. The output of the relational recommender system/ unit is a score assigned to each available item that indicate the relevance (∼ the likelihood that the user will selects the item) given the current partial configuration and the specified tags. For each "free slot" in the template solution, we filter for suitable items (mostly by the categories that fit in this slot) and display them in descending order with respect to their relevance scores.

The user then selects one (or more) items from the ranked list and continues with the configuration. However, if we wish to complete the entire template without waiting for further input from the user, we can proceed with an auto-completion of the template. Among all free slots, the item with the highest relevance score is automatically selected to fill the corresponding slot and the slot is removed from the set of all free slots ("greedy strategy"). This procedure is iterated until there are no more slots to fill and the template is completed.

For generating the proposals partial configuration is used by the second recommendation system/ recommender unit as context. Partial configuration uses a list of components (configurable items/ technical devices) that have already been selected by the user of the proposed method. Partial configuration comes from the template that is suggested by the first recommender unit.

The recommender unit is constantly improved by continuous or periodical learning. A dynamic feedback loop is employed. The method actively reacts on the user selections/ actions and refines template and hardware configuration suggestions/ recommendations/ prognoses depending on the user actions. This results in a re-ordering of the lists/ suggestion order of the configurable items of each hardware configuration (lists for each node (nodes correspond to configurable items/ technical devices as described above) from the template) depending on the current selection of the user. Optional the suggested templates can also be re-ordered based on the current selection of the user, and the current selection gets transferred to the new templates.

The use of a recommender unit has the advantage that the quality of configuring and constructing a technical system is improved. Given already selected components (configurable items/ technical devices) along with the chosen template and tags that specify the context of a solution (such as an application area) the relational recommendation system/ the recommender unit proposes the best fitting components (configurable items/ technical devices) to be used in each of the "slots" of the structure defined for the technical system.

The training has the advantage that several AI-based techniques on a large collection of historical/ past hardware configurations can be applied to automatically discover frequently used configuration templates and generate proposals (of hardware configurations) for completing these templates with components (configurable items/ technical devices), that best match user's functional requirements.

According to a further embodiment, the training of the first recommender unit includes the following steps:
- Pattern mining/ template mining of the knowledge graph using a graph pattern mining procedure,
- generating pairs of patterns using the patterns mined from the knowledge graph, whereas the pairs of patterns represent graph structures and corresponding graph sub-structures and
- assigning a confidence value to each pair of patterns, whereas a generated pair of patterns with its assigned confidence value forms a template whereas the confidence value gives the confidence for suggesting the template by the first recommender unit.

For the pattern mining various state-of-the-art graph pattern mining procedures can be used to discover a collection of templates. In case timestamps are put as link types, a procedure such as GERM can be applied to discover temporal templates. In case of composite relationships as link types, a procedure such as DIMSpan or gSpan can be applied. These procedures search for frequent substructures across the collection of graphs. In addition to frequency, other metrics to discover "interesting" patterns can be employed. For example, a coverage-based pattern mining procedure could be used, i.e., procedure that searches for patterns that best cover historical configuration graphs. The other criteria to refine the search for templates can be the variety of configurable items/ technical devices in the template and its topological properties (size, connectedness, maximum degree, presence of cycles etc.). These additions lead to the development of a customized graph pattern mining procedure.

The pattern mining procedure has the advantage that frequent or "interesting" templates of historical/ past hardware configurations can be discovered.

All mined patterns are used to generate pairs of patterns, where the first pattern of the pair is the body of the template and the second pattern of the pair is its head. The body can be empty which corresponds to the situation when the new system has no configurable items/ technical device so far. Such a pair of patterns gets assigned a confidence value which is between 0 and 1.

The confidence value is calculated as the ratio of the body support to the head support. The body support and the head support of a pattern can be calculated using either minimum image-based or minimum overlap formula. The pair of patterns (body -> head) with its confidence forms one template.

According to a further embodiment, annotations to the template are provided by a user.

According to a further embodiment, the annotations are used as a basis for filters applied by a user.

Potentially a very large family of templates can be obtained with the template mining. To enable further customization and context enhancement, the user can provide annotations for some of the discovered templates. The user can then apply filters based on these annotations.

According to a further embodiment, the technical system is an engineering system, an automatization system, a production system and/ or an industrial system and/ or includes a technical project on the technical system.

The present invention further claims a computational device designed to carry out the steps of the inventive method.

The present invention further claims a computer program product comprising instructions which, when the program is executed by the computational device, cause the computational device to carry out the steps of the inventive method.

The present invention further claims a computer-readable storage medium comprising instructions which, when executed by the computational device, cause the computational device to carry out the steps of the inventive method.

Further benefits and advantages of the present invention will become apparent after a careful reading of the detailed description with appropriate reference to the accompanying drawings.

### Brief Description of the Drawings

- Fig. 1: shows the connections of the method steps and components,
- Fig. 2: shows the process of generating templates from mined patters,
- Fig. 3: shows the annotation of templates,
- Fig. 4: shows an application step of the proposed method, and
- Fig. 5: shows an architecture of the relational recommender system.

### Detailed Description of the Invention

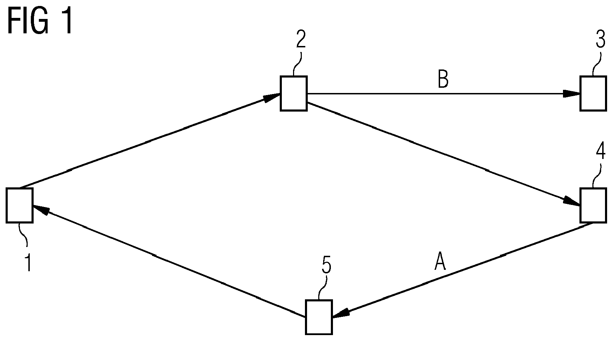

Fig. 1 shows the connections of the method steps and components:
- A first recommender unit gives suggestions 1 of templates 5 and a second recommender unit suggests 1 corresponding hardware configurations for configuring a technical system to a user, whereas each hardware configuration comprises configurable items.
- A user makes selections 2 of a template and a specific hardware configuration. These selections 2 are stored as historical hardware configurations and transferred to a computational system.
- Further, the selections 2 are used for configuring the technical system 3 for preparation of constructing B the technical system 3.
- By the computational system the transferred historical hardware configurations are merged with technical information of the configurable items and represented in the form of a knowledge graph 4.
- The knowledge graph 4 is used for the training A of the first recommender unit and to adapt the suggestion of templates and of the second recommender unit to adapt the suggestion of hardware configurations.
The training A of the first recommender unit includes a graph pattern mining procedure and a generation templates 5 (whereas a template is formed by a pair of patterns with an assigned confidence value).

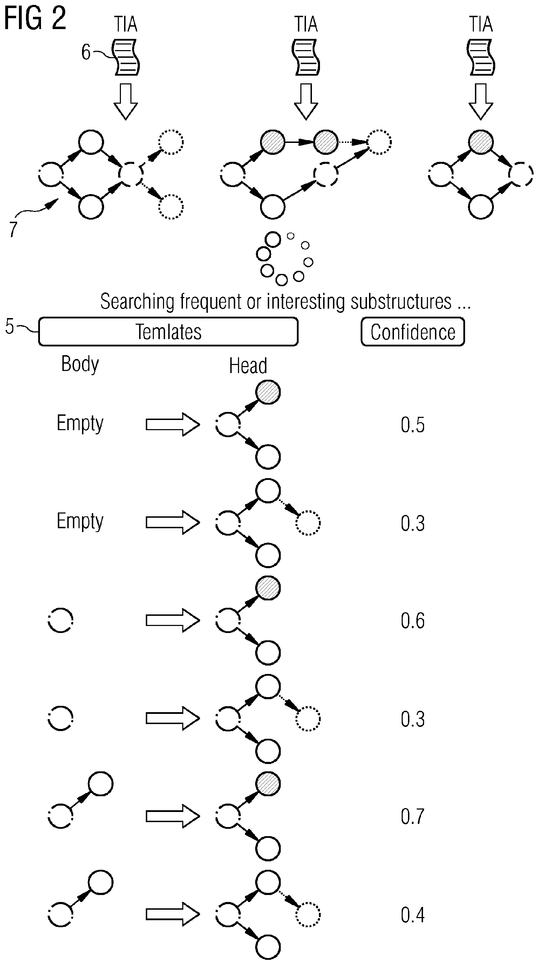

Fig. 2 shows the process of generating templates 5 from mined patters from historical/ past hardware configurations 6. All mined patterns 7 are used to generate pairs of patterns, where the first pattern of the pair is the "Body" of the template 5 and the second pattern of the pair is its "Head". The "Body" can be empty (see first two templates 5 in Fig. 2) which corresponds to the situation when the new system has no configurable items/ technical device so far. All pairs of patterns get assigned a "Confidence" which is between 0 and 1.

The "Confidence" is calculated as the ratio of the body support to the head support. The body support and the head support of a pattern can be calculated using either minimum image-based or minimum overlap formula. The pair of patterns (body -> head) with its confidence forms one "Template" 5.

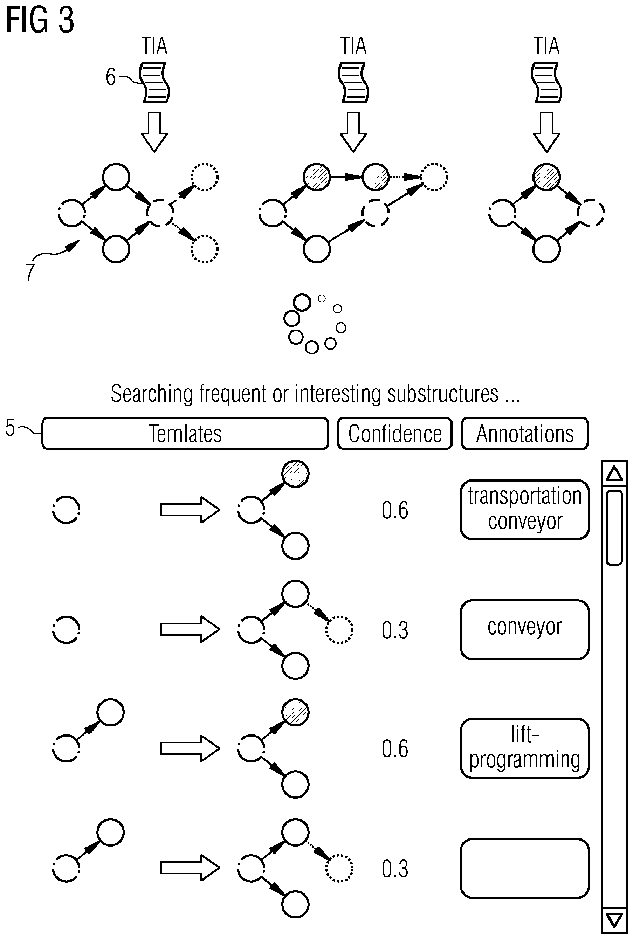

Fig. 3 shows in addition to Fig. 3 the process of annotating templates 5 by a user. The annotations can be used as a basis for filters applied by a user. This has the advantage to handle very large family of templates 5, which can potentially be obtained with the template mining. To enable further customization and context enhancement, the user can provide annotations for some of the discovered templates 5. The user can then apply filters based on these annotations.

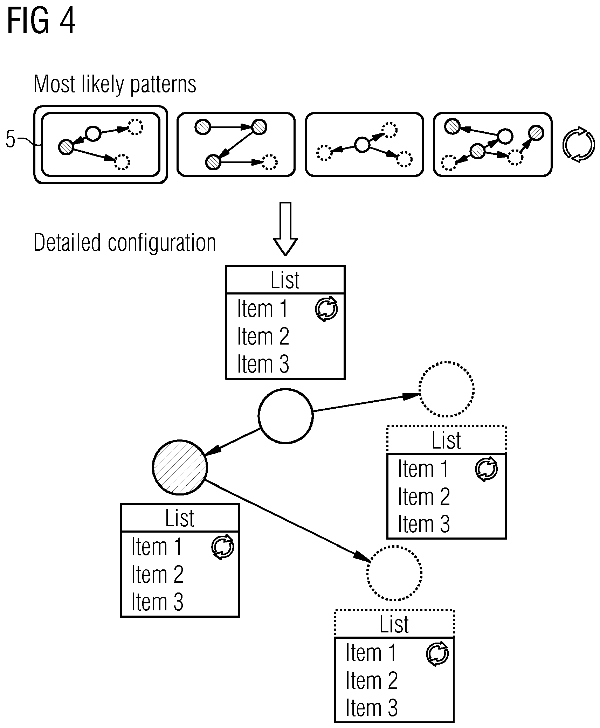

Fig. 4 shows an application step of the proposed method. "Most likely patters" (= templates 5) are suggested by the first recommender unit. The corresponding "Detailed configuration" to the selected "Most likely pattern" (the left on in the example of Fig. 4) is shown by the second recommender unit, too. For each node a "List" of "Items" is shown. Nodes correspond to configurable items/ technical devices which form the hardware configuration of the technical system. The "lists" of "items" are ranked lists of suggestions provided by the second recommender unit. Each item corresponds to a specific configurable item / technical device with their technical details.

The first recommender unit and the second recommender unit are constantly improved by continuous or periodical learning (indicated by the circular arrows in Fig. 4). A dynamic feedback loop is employed. The method actively reacts on the user selections/ actions and refines template and hardware configuration suggestions/ recommendations/ prognoses depending on the user actions. This results in a re-ordering of the "lists"/ suggestion order of the configurable items of each hardware configuration ("lists" for each node (nodes correspond to configurable items/ technical devices as described above) from the template) depending on the current selection of the user. Optional the suggested templates can also be re-ordered based on the current selection of the user, and the current selection gets transferred to the new templates.

The use of recommender units has the advantage that the quality of configuring and constructing a technical system is improved.

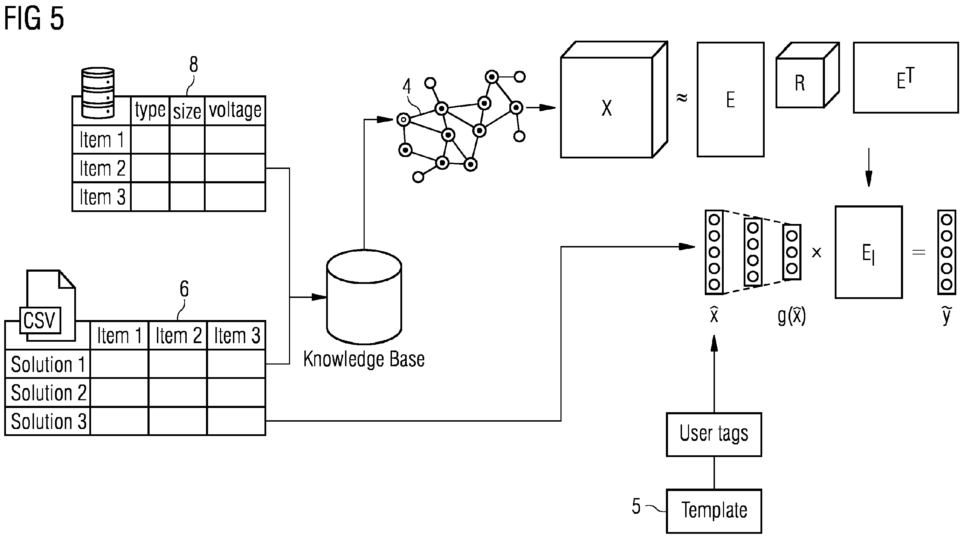

Fig. 5 shows an exemplary architecture of the relational recommender system. In the example two data tables are being fed into the "Knowledge Base". The tables represent the information available. The first table represents for example the technical information 8 about the components (= "items"). The second table represents for example the historically hardware configurations 6.

The information from the tables is combined to form a joint knowledge graph 4.

This knowledge graph 4 can be equivalently represented as a three-dimensional adjacency tensor X, which we then factorize (i.e., matrix E and tensor R, which, when multiplied together, approximate the original tensor X) in order to obtain so-called "item embeddings" (i.e. numerical representation of the items in the latent space which encode their technical information 8 and ensure compatibility).

Simultaneously, a neural network is trained with historical/ past hardware configurations 6, "user tags", "template" 5 and the item embeddings obtained before as input. This neural network is what ultimately gives the user a recommendation on how to complete the template.

A relational recommendation system/ recommender unit is a hybrid recommender engine that takes as input a numerical vector x^ corresponding to the partial configuration (e.g. multi-hot encoded) concatenated with the specified "user tag" and an encoding of the selected "template" 5. The output of the relational recommender system/ unit is a score ~y assigned to each available item that indicate the relevance (∼ the likelihood that the user will selects the item) given the current partial configuration and the specified "tags". For each "free slot" in the template solution, we filter for suitable items (mostly by the categories that fit in this slot) and display them in descending order with respect to their relevance scores.

The user then selects one (or more) items from the ranked list and continues with the configuration. However, if we wish to complete the entire template without waiting for further input from the user, we can proceed with an auto-completion of the template. Among all free slots, the item with the highest relevance score is automatically selected to fill the corresponding slot and the slot is removed from the set of all free slots ("greedy strategy"). This procedure is iterated until there are no more slots to fill and the template is completed.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

### List of Reference Signs

- 1: Suggestion
- 2: Selection
- 3: Technical system
- 4: Knowledge graph
- 5: Template
- 6: Historical hardware configurations
- 7: Mined patterns
- 8: Technical information

- A: Training
- B: Constructing

## Claims

1. Computerized method for configuring and constructing (B) a technical system (3), **comprising** the following steps:
- Suggesting (1) templates (5) for configuring the technical system (1) by a first recommender unit,
- selecting (2) a template (5) by a user,
- suggesting (1) hardware configurations for the technical system (3) corresponding to the suggested (1) templates (5) by a second recommender unit, whereas each hardware configuration comprises configurable items,
- selecting (2) a specific hardware configuration by a user,
- storing the selected (2) hardware configuration as historical hardware configuration (6),
- transferring the historical hardware configuration (6) to a computational system, and
- configuring the technical system (3) for preparation of the construction (B) of the technical system (3) using the selected (2) hardware configuration.

2. Method according to claim 1,
**whereas** the suggestion (1) of the templates (5) is based on a specified tag and/ or a collection of configurable items specified to be part of the technical system (3).

3. Method according to one of the previous claims,
**whereas** the first recommender unit and the second recommender unit are trained (A) by the following steps:
- Representing the historical hardware configurations (6) merged with technical information (8) of the configurable items in the form of a knowledge graph (4) by the computational system,
- training (A) the first recommender unit using the knowledge graph (4), and
- training (A) the second recommender unit to adapt the suggestion (1) of hardware configurations.

4. Method according to one of the previous claims,
**whereas** the training (A) of the first recommender unit includes the following steps:
- Pattern mining (B) of the knowledge graph (4) using a graph pattern mining procedure,
- generating pairs of patterns using the patterns mined from the knowledge graph (4), **whereas** the pairs of patterns represent graph structures and corresponding graph sub-structures and
- assigning a confidence value to each pair of patterns, **whereas** a generated pair of patterns with its assigned confidence value forms a template (5), **whereas** the confidence value gives the confidence for suggesting (1) the template (5) by the first recommender unit.

5. Method according to one of the previous claims,
**whereas** annotations to the template (5) are provided by a user.

6. Method according to claim 5, **whereas**
the annotations are used as a basis for filters applied by a user.

7. Method according to one of the previous claims, **whereas** the technical system (3) is an engineering system, an automatization system, a production system and/ or an industrial system and/ or includes a technical project on the technical system.

8. Computational device designed to carry out the steps of the method according to one of the claims 1 to 7.

9. A computer program product comprising instructions which, when the program is executed by the computational device, cause the computational device to carry out the steps of the method according to one of the claims 1 to 7.

10. A computer-readable storage medium comprising instructions which, when executed by the computational device, cause the computational device to carry out the steps of the method of claim according to one of the claims 1 to 7.
